# EUROPÄISCHE PATENTSCHRIFT

(11) **EP 0 458 075 B1**
(45) Veröffentlichungstag und Bekanntmachung des Hinweises auf die Patenterteilung: **31.08.1994**
(21) Anmeldenummer: 91106531.6
(22) Anmeldetag: 23.04.1991
(51) Int. Cl.: B44F 1/00, B44F 1/04

(54) **Dekortafel**
Decorative panel
Panneau décoratif

(30) Priorität: 23.05.1990 DE 4016700; 13.08.1990 DE 4025642
(43) Veröffentlichungstag der Anmeldung: 27.11.1991
(73) Patentinhaber: D. Swarovski & Co., A-6112 Wattens/Tirol (AT)
(72) Erfinder: Altmayer, Andreas, A-6060 Mils (AT)
(74) Vertreter: Kador & Partner

(56) Entgegenhaltungen:
- EP-A- 0 138 588
- CH-A- 351 193
- FR-A- 2 379 973
- US-A- 4 223 374
- US-A- 4 250 537
- US-A- 4 942 744

## Beschreibung

Die Erfindung betrifft eine Dekortafel mit einer Glasplatte, auf der eine Vielzahl von facettierten Glassteinchen in ornamentaler Anordnung fixiert sind.

Es sind verschiedenartige Dekortafeln bekannt, u.a. auch solche, bei denen auf einer durchsichtigen Scheibe facettierte Glassteine in ornamentaler Anordnung vorgesehen sind, wie dies in der CH-PS 654065 beschrieben ist.

Es besteht jedoch ein Bedarf zur Schaffung neuer Dekortafeln, die sich durch besondere optische und ästhetische Effekte auszeichnen.

Der Erfindung liegt daher die Aufgabe zugrunde, neue Dekortafeln mit besonderen optischen und ästhetischen Effekten zu schaffen.

Der Erfindung liegt die Erkenntnis zugrunde, daß solche neue Dekortafeln dadurch geschaffen werden können, daß Glasplatten, die facettierte Glassteinchen in ornamentaler Anordnung aufweisen, mit Platten mit einer Reflexionsschicht zu Dekortafeln kombiniert werden. Der Erfindung liegt weiters die Erkenntnis zugrunde, daß besondere Effekte dann erzielt werden können, wenn die Glassteinchen gezielt beleuchtet werden.

Gegenstand der Erfindung ist eine Dekortafel gemäß Anspruch 1.

In einer bevorzugten Ausführungsform sind in Bohrungen im Abstandshalter Linsenkörper angeordnet, denen Licht mittels optischer Leiter zugeführt wird, und die Glassteinchen werden durch das von den Linsenkörpern abgestrahlte Licht beleuchtet.

In einer weiteren bevorzugten Ausführungsform besteht der Abstandshalter ganz oder teilweise aus einer Glasleiste, durch die Licht einer außerhalb angeordneten Lichtquelle durchtritt, wodurch die Glassteinchen beleuchtet werden.

Die besondere optische und ästhetische Wirkung der erfindungsgemäßen Dekortafel besteht darin, daß durch die Platte mit Reflexionsschicht der Eindruck erweckt wird, daß sowohl auf der Glasplatte als auch auf der Platte mit Reflexionsschicht Glassteinchen fixiert seien.

Durch die Beleuchtung der Glassteinchen wird ein ungeheuerer Glitzereffekt in allen Spektralfarben erreicht. Von der Reflexionsschicht werden die Lichtreflexe reflektiert, wodurch der Glitzereffekt noch gesteigert wird.

Die erfindungsgemäßen Dekortafeln eignen sich für verschiedenste Anwendungen. So können z.B. Decken und Wände damit gestaltet werden.

Die Dekortafeln können beliebige Größe aufweisen, wobei der räumliche Abstand zwischen Glasplatte und Platte mit Reflexionsschicht beispielsweise 6 bis 20 mm betragen kann. Die Dekortafeln können rechteckig, quadratisch, rund, oval oder aber auch asymmetrisch gestaltet sein.

Die Glasplatte mit Glassteinchen weist die Glassteinchen in ornamentaler Anordnung auf, wobei den vielfältigen Möglichkeiten keine Grenzen gesetzt sind. Die Glassteinchen können in Form graphischer Ornamente, Bilder oder Schriftzüge vorliegen.

Die facettierten Glassteinchen sind vorzugsweise geschliffene Glassteine aus Bleikristall. Die Größe kann in weiten Grenzen variieren, beispielsweise zwischen 0,3 und 10 mm. Von der Form her sind Chatons besonders geeignet, aber auch Rosen kommen in Betracht. Die Chatons werden mit der Tafel auf die Glasplatte geklebt, die dem Betrachter zugewandt sein soll. Die Steine sind vorzugsweise farblos, können aber auch - gegebenenfalls nur zum Teil - aus buntem Glas bestehen oder mit Metallschichten bedampft sein.

Die Steine werden auf die dem Betrachter abgewandte Seite der Glasplatte mit durchsichtigem Klebstoff geklebt, vorzugsweise einem UV-härtendem Acrylkleber. Als Glasplatte wird vorzugsweise eine Floatglasplatte verwendet.

Die Platte mit Reflexionsschicht ist vorzugsweise eine Glasplatte mit Spiegelschicht. Die Spiegelschicht ist üblicherweise eine Silberschicht.

Die Spiegelschicht kann auch eine teildurchlässige Spiegelschicht sein, wodurch besondere Effekte erzielt werden.

Anstelle einer Spiegelschicht kann auch eine reflektierende Farbschicht, beispielsweise eine Lackschicht vorgesehen sein.

Die reflektierende Schicht muß nicht durchgehend die Platte bedecken sondern kann in Form von Motiven, beispielsweise mittels Siebdruck aufgebracht, oder Glasmalerei vorliegen.

Die Platte mit Reflexionsschicht wird im Abstand von der Glasplatte mittels Abstandhaltern angeordnet.

Es versteht sich, daß die Reflexionsschicht dem Betrachter zugewandt ist.

Es wird bevorzugt, die Glasplatte mit aufgeklebten Glasteinchen und die Platte mit Reflexionsschicht zu einer geschlossenen Dekortafel zusammenzufassen, insbesondere um die Glassteine vor Verschmutzung zu schützen und ein leichteres Anbringen der Dekortafel zu ermöglichen.

Zur Beleuchtung der Glassteinchen in der Dekortafel werden in Bohrungen im Abstandshalter der Dekortafel zahlreiche Linsenkörper eingesetzt, denen Licht mittels optischer Leiter zugeführt wird. Die Linsenkörper strahlen die Glasteilchen an, wodurch besondere Glitzereffekte erzielt werden. Die Linsenkörper bestehen vorzugsweise aus Glas oder Kunststoff.

Alternativ kann die Dekortafel auch von der Seite beleuchtet werden. Der Abstandshalter besteht dann ganz oder teilweise aus einer Glasleiste. Durch diese wird Licht von einer außerhalb der Dekortafel angeordneten Lichtquelle auf die Glassteinchen gerichtet.

Die Erfindung wird nachstehend anhand der Zeichnung näher erläutert, die beispielshafte Ausführungsformen zeigt.

Es zeigen:
- Figur 1: eine Draufsicht auf eine Dekortafel,
- Figur 2: einen Querschnitt durch eine Dekortafel,
- Figur 3: einen Querschnitt durch eine Dekortafel mit Beleuchtungseinrichtung, und
- Figur 4: einen Querschnitt durch eine Dekortafel mit außerhalb derselben angeordneten Beleuchtungseinrichtung.

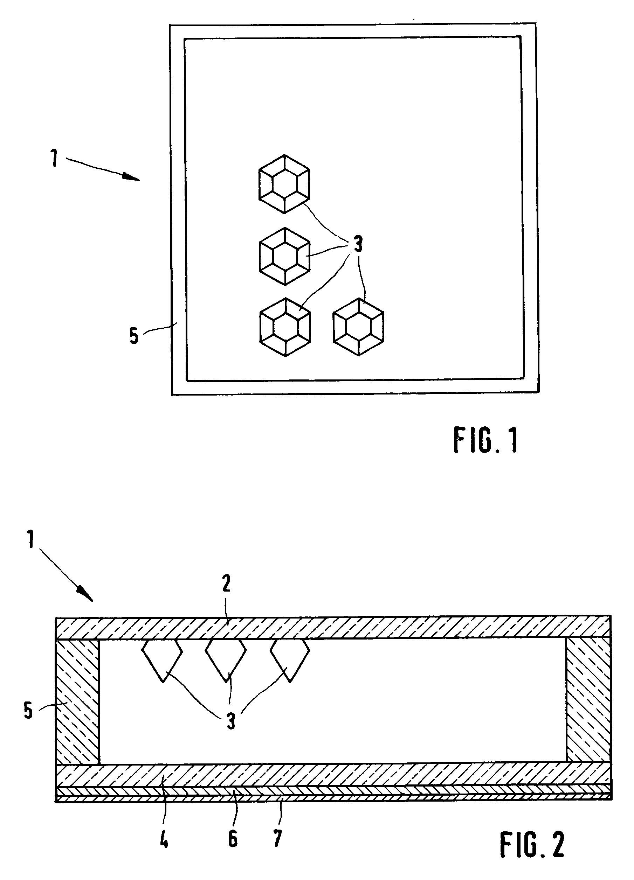

Figur 1 zeigt die Dekortafel 1 mit einem Ornament aus einer Vielzahl facettierter Glassteinchen 3. Die Platten werden vom Abstandshalter 5 in geeignetem Abstand gehalten.

Wie aus Figur 2 zu ersehen ist, ist dem Betrachter die Glasplatte 2 mit den facettierten Steinchen 3 zugewandt. Die Glassteinchen 3 befinden sich auf der dem Betrachter abgewandten Seite der Glasplatte 2. Dahinter ist im Abstand die Platte 4 mit Reflexionsschicht 6 und Schutzschicht 7 angeordnet, wobei die reflektierende Seite den Glassteinchen zugewandt ist. Die beiden Platten sind durch den Abstandshalter 5 zusammengefaßt.

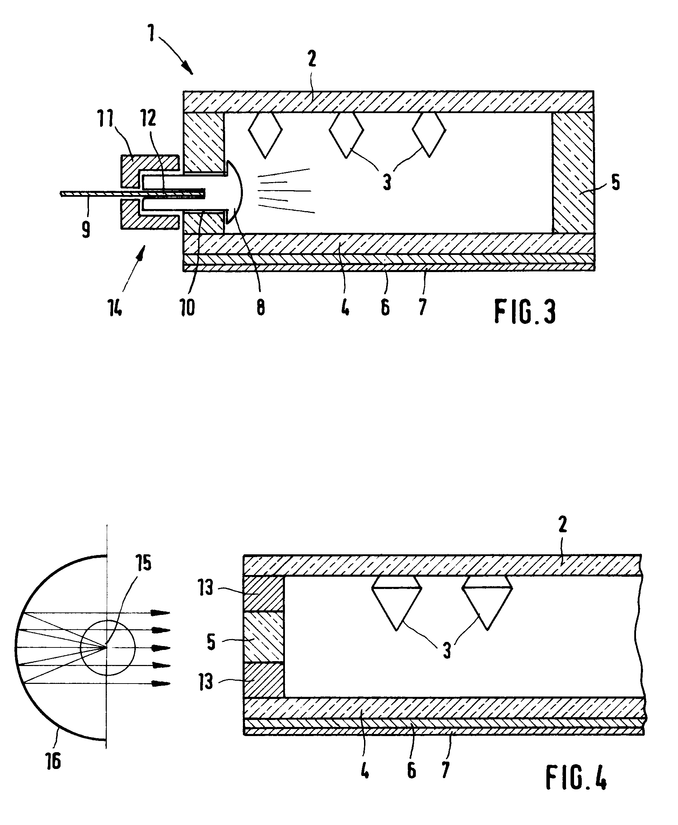

In Fig. 3 ist eine bevorzugte Ausführungsform mit Beleuchtungseinrichtung 14 gezeigt. Im Abstandshalter 5 sind Bohrungen 10 vorgesehen, in die Linsenkörper 8 eingesetzt werden können. Diese werden mittels optischer Leiter 9 mit Licht versorgt. Von dem vorderen linsenförmigen Teil strahlt das Licht auf die Glassteinchen 3. Eine - z.B. aufgeklebte - Sicherung 11 fixiert die Linsenkörper 8 in der Bohrung 10 und fixiert auch den optischen Leiter 9, der in eine Bohrung 12 des Linsenkörpers 8 hineinreicht. Die Linsenkörper (8) bestehen aus Glas oder Kunststoff.

In Figur 4 ist eine bevorzugte Ausführungsform gezeigt, bei der Licht mittels einer außerhalb der Dekortafel angeordneten Lichtquelle 15 mittels eines Reflektors 16 auf die Glassteinchen 3 gebündelt wird. Der Abstandshalter 5 besteht ganz oder teilsweise aus einer Glasleiste. Bei dieser Ausführungsform können die Glassteinchen 3 der Dekortafeln besonders gezielt und hell erleuchtet werden, so daß sich besondere optische Effekte verwirklichen lassen.

Der Abstandshalter kann auch nur teilweise aus einer Glasleiste bestehen, dies ist in Figur 4 gezeigt, wo die Glasleiste 5 zwischen zwei Rahmenteilen 13 aus Metall oder Kunststoff eingebettet ist.

Aus beleuchtungstechnischen Gründen genügt es, wenn die Möglichkeit der Lichteinleitung über 25 bis 50 % der Kantengesamtlänge erfolgt, d. h. bei einer rechteckigen Dekorplatte nur an einer bzw. zwei Seiten.

Es können grundsätzlich Gläser unterschiedlichster optischer Qualität für die Dekorplatte verwendet werden. Gläser mit speziellen Beschichtungen zur Veränderung der lichttechnischen Effekte (z. B. Einspiegelung, Teilverspiegelung, Änderung der Brechung usw.) sowie Farbgläser ergeben eine Reihe von gestalterischen Möglichkeiten der Wirkung und Anwendung. Auch die Platte mit Reflexionsschicht besteht vorzugsweise aus einer Glasplatte.

Die für die Glasfassadengestaltung häufig zur Anwendung kommenden Sonnen- bzw. Wärmeschutzgläser werden in ihrer energetischen Wirkung (g- und k-Wert) durch die integrierten Glassteinchen 3 im Verbund zusätzlich verbessert. Im Überkopf- und Außenbereich ist der Einsatz von Sicherheitsgläsern möglich.

Die Dekortafeln können auch als Leuchten zur spezifischen Raumbeleuchtung eingesetzt werden.

Die Anwendung der Dekortafeln liegt insbesondere im architektonischen Bereich, angefangen von Fassaden, Decken, Raumteilern, Wintergärten, Kunstobjekten bis hin zu Informationsträgern, die sich durch besondere optische und ästhetische Effekte auszeichnen, aber auch einfach zu reinigen und zu warten sind.

Die Dekortafeln eignen sich auch besonders als Informationsträger, z. B. eines Firmenlogos, in Glasfassaden von Hochhäusern. Durch die Retroreflexion des Tages bzw. des Sonnenlichtes an den Glassteinchen ist auch ein wirksamer Schutz gegen den Vogelanflug gegeben.

In der Innenraumgestaltung besteht bei horizontaler Anordnung der Dekortafeln die Möglichkeit damit dekorative Dekkenauf- bzw. einbausysteme, sowie von der Decke abgehängte Objekte, die auch eine beleuchtungstechnische Funktion aufweisen können, zu realisieren.

Als vertikales Objekt im Innenraum können die Dekortafeln an Wänden zur optischen Vergrößerung von Räumen und als Raumteiler dienen, oder freistehend als dekoratives Hinweisschild bzw. Kunstobjekt mit einem speziellen Design ausgeführt werden.

## Patentansprüche

1. Dekortafel mit einer Glasplatte, auf der eine Vielzahl von facettierten Glassteinen in ornamentaler Anordnung fixiert ist, **dadurch gekennzeichnet,** daß die Dekortafel (1) eine zweite Glasplatte (4) aufweist,
die durch einen Abstandshalter (5) von der ersten Glasplatte (2) beabstandet und damit verbunden ist wobei auf der Außenseite der Glasplatte (4) eine Reflexionsschicht vorgesehen ist, und die auf der ersten Glasplatte (2) fixierten Glassteine (3) auf der der zweiten Glasplatte (4) zugewandten Seite angeordnet sind.

2. Dekortafel nach Anspruch 1, **dadurch gekennzeichnet,** daß in Bohrungen (10) im Abstandshalter (5) Linsenkörper (8) angeordnet sind, denen Licht mittels optischer Leiter (9) zugeführt wird, und die Glassteinchen (3) durch das von den Linsenkörpern (8) abgestrahlte Licht beleuchtet werden.

3. Dekortafel nach Anspruch 1, **dadurch gekennzeichnet,** daß der Abstandshalter (5) ganz oder teilweise aus einer Glasleiste (13) besteht, durch die Licht einer außerhalb angeordneten Lichtquelle (15) durchtritt und die Glassteinchen (3) beleuchtet werden.

## Claims

1. An ornamental panel having a glass plate to which a number of faceted glass stones are fixed in an ornamental arrangement, **characterized** in that the ornamental panel (1) includes a second glass plate (4) which is spaced from the first glass plate (2) by spacing means (5) and connected therewith, a reflecting layer being provided on the outside of the glass plate (4), and the glass stones (3) fixed to the first glass plate (2) being disposed on the side facing the second glass plate (4).

2. The ornamental panel of claim 1, **characterized** in that lens bodies (8) are disposed in bores (10) in the spacing means, light being supplied to said bodies by means of optical conductors (9), and the glass stones (3) are illuminated by the light radiated by the lens bodies (8).

3. The ornamental panel of claim 1, **characterized** in that the spacing means consist wholly or partly of a glass strip (13) through which light passes from an external light source (15) thereby illuminating the glass stones (3).

## Revendications

1. Panneau décoratif comprenant une plaque de verre sur laquelle un grand nombre de pierres de verre à facettes sont fixées dans une disposition ornementale, caractérisé en ce que le panneau décoratif (1) comprend une deuxième plaque de verre (4) qui est maintenue à distance de la première plaque de verre (2) et assemblée à cette première plaque par une entretoise (5), une couche réfléchissante étant prévue sur la face extérieure de la plaque de verre (4) et les pierres de verre (3) fixées sur la première plaque de verre (2) étant disposées sur la face qui est dirigée vers la deuxième plaque de verre (4).

2. Panneau décoratif selon la revendication 1, caractérisé en ce que, dans des perçages (10) pratiqués dans l'entretoise (5), sont disposés des corps (8) formant lentilles, auxquels de la lumière est transmise au moyen de conducteurs optiques (9), et les petites pierres de verre (3) sont illuminées par la lumière rayonnée par les corps (8) formant lentilles.

3. Panneau décoratif selon la revendication 1, caractérisé en ce que l'entretoise (5) est entièrement ou partiellement composée d'une barrette de verre (13) à travers laquelle la lumière d'une source de lumière (15) disposée à l'extérieur pénètre et illumine les petites pierres de verre (3).
